# EUROPEAN PATENT SPECIFICATION

(11) **EP 1 857 745 B1**
(45) Date of publication and mention of the grant of the patent: **03.07.2013**
(21) Application number: 07107326.6
(22) Date of filing: 02.05.2007
(51) Int. Cl.: F24H 3/00, F24H 9/16, F24H 9/20, F16K 17/04

(54) **Electric heating structure, in particular a bathroom towel warmer or a radiator.**
Elektrische Heizstruktur, insbesondere ein Handtucherwärmer oder ein Heizkörper
Structure chauffante électrique, en particulier chauffeur de serviette de salle de bain ou radiateur

(30) Priority: 16.05.2006 IT VE20060015 U
(43) Date of publication of application: 21.11.2007
(73) Proprietor: I.R.C.A. S.p.a. Industria Resistenze Corazzate e Affini, 31020 San Vendemiano (IT)
(72) Inventor: Vian, Stefano, I.R.C.A. S.p.A., 31020, San Vendemiano (IT)
(74) Representative: Piovesana, Paolo

(56) References cited:
- FR-A- 1 578 131
- GB-A- 160 111
- GB-A- 434 595
- GB-A- 2 211 593

## Description

The present invention relates to an electric heating structure, in particular a bathroom towel warmer or a radiator.

Bathroom towel warmers are known consisting of two uprights connected together by a plurality of tubes through which a heating fluid circulates.

These known towel warmers are generally provided with a manual bleed valve at the upper end of one of the uprights.

The valve is generally used during towel warmer installation to bleed the air present in the hydraulic circuit.

During installation an expansion space must be left free in order not to allow the heated fluid to generate high pressures which could put the safety of the towel warmer at risk, therefore the installer generally overdimensions this expansion space, with the drawback that often the upper part of the towel warmer is without liquid, so that the heat transfer efficiency of the towel warmer generally decreases.

To this must be added the fact that if the towel warmer is powered by an electrical resistance element provided with a safety and/or adjustment device such as an automatic reset thermostat, and if for any reason this thermostat does not act to interrupt current feed on attaining the preset temperature, the fluid heats up considerably and expands to generate pressures which are so high as to create dangerous situations, such as mechanical and structural yielding of the towel warmer.

To eliminate these drawbacks, automatic bleed valves have been proposed which are activated when the system pressure exceeds a preset safety value, and have their discharge channel generally provided on the lateral surface of the valve body to suitably direct the pressurized fluid discharge.

However, these valves have the drawback of not enabling the discharge channel to be orientated after their installation, hence to orientate the valve discharge flow in those directions which do not cause damage to persons or objects, the valve orientation has to be set by locking it in the most suitable position for this to happen.

This orientation is achieved by using a spanner to tighten the clamping nut until the valve discharge channel is positioned in the required direction.

However, this solution presents the drawback that excessive tightening of the nut may damage the seal gasket, whereas insufficient tightening can give rise to leakages.

GB 160111 discloses an electric heating structure according to the preamble of claim 1 and relates to a hotwater circulating-radiators and like heating-apparatus such as towel rail and like drying and airing devices. These devices are fitted with an exterior heating chamber provided with an electric immersion heater.

GB 434595 relates to a relief valve, which may be used in conjunction with a fuel injection pump, comprising a body integral with a stem upon which slides a sleeve secured to the body by means of a nut. A byepass passage leads to an annular space connected to the relief pipe.

The object of the invention is to eliminate these drawbacks by providing an electric heating structure, in particular a towel warmer or a radiator, provided with an automatic safety valve the exit jet of which can be easily and comfortably adjusted.

This object is attained by an electric heating structure, in particular a towel warmer or a radiator as claimed in claim 1.

An embodiment of the present invention is further described hereinafter with reference to the accompanying drawings, in which:

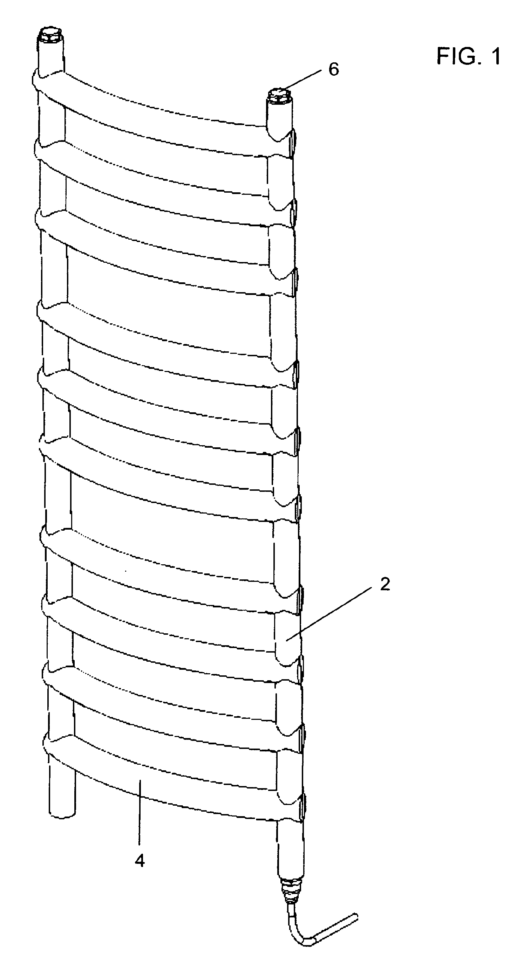

Figure 1 is a perspective view of an electric heating structure according to the invention,

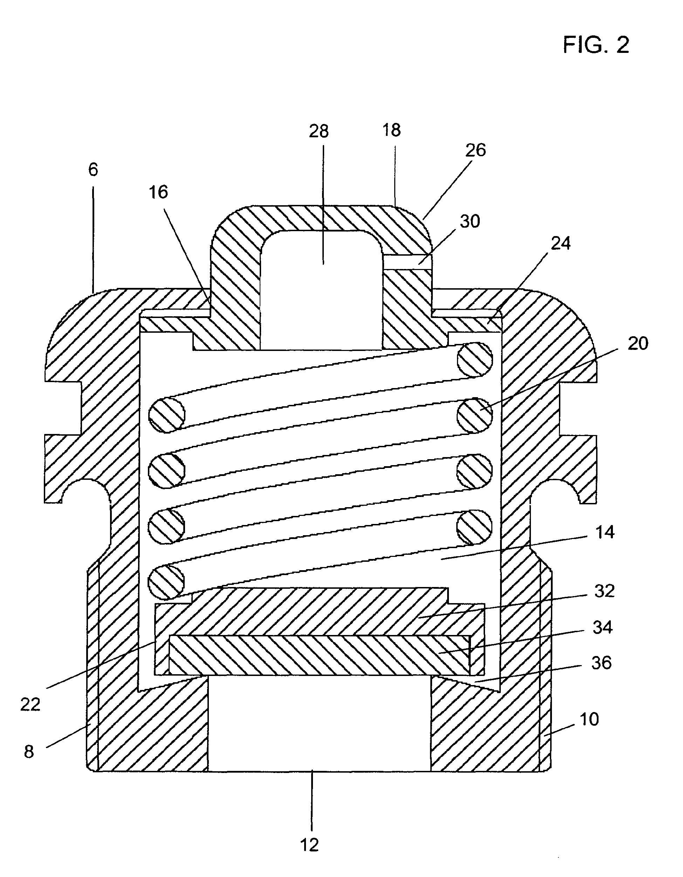

Figure 2 is a longitudinal section through the valve.

As can be seen from the figures, the electric heating structure according to the invention, which in the illustrated example is a towel warmer, comprises substantially two uprights 2 connected together by a plurality of horizontal tubes 4 forming support elements for the towels.

An automatic bleed valve indicated overall by 6 is applied to the upper end of one of the uprights 2.

The valve 6 substantially comprises a sleeve 8 provided with a threaded portion 10 for engaging one of the uprights 2, an entry aperture 12 of diameter less than the central cavity 14 and a hole 16 of substantially the same diameter as the entry aperture 12.

The interior of the central cavity 14 houses a retention member 18, a helical spring 20 and a shut-off element 22.

The retention member 18 consists of an annular body 24, the outer diameter of which corresponds substantially to the diameter of the central cavity 14, and has a cap 26, the outer diameter of which corresponds substantially to the diameter of the hole 16, and which is provided internally with a vertical channel 28 communicating with the outside via a horizontal conduit 30.

In the illustrated example the annular body 24 and the cap 26 are formed in one piece, however they could be formed separately.

The shut-off element 22 comprises a seal holder 32 with a seal pad 34 and rests on the annular part 36 of the entry aperture to ensure that the valve seals when in its rest condition.

The towel warmer of the invention is used as follows:
the valve is screwed into the upright until it seals.

When this seal is achieved, the user presses on the cap 26 then, on overcoming the elastic reaction of the helical spring 20, rotates the cap 26 until the horizontal conduit 30 is orientated in the required direction.

On release, the elastic reaction of the spring 20 again returns the cap 26 to the position resting via its discoidal portion 24 against the upper surface of the sleeve.

With regard to the valve operation, this is traditional in that following overpressure, the shut-off element is raised to enable fluid to escape via the entry aperture 12, the central cavity 14, the vertical channel 28 and the horizontal conduit 30.

From the aforegoing it is apparent that the electric heating structure of the invention presents numerous advantages, and in particular:
- during its installation, it enables a natural expansion chamber to be created for the liquid in its interior,
- it enables the excess fluid to be discharged in the required direction,
- it enables the internal pressure of the electric heating structure to be automatically limited to a preset rated value.

The invention has been described in particular for a towel warmer but it is apparent that the invention, as defined by the claims, can also be applied to a radiator.

## Claims

1. An electric heating structure, in particular a towel warmer or a radiator, provided with an automatic safety valve, **characterised in that** said valve comprises
a sleeve (8) provided with an entry aperture (12) of a diameter less than a central cavity (14) and a hole (16), in the interior of said central cavity (14) of said sleeve (8) there being slidably disposed
- a shut-off element (22) for closing said entry aperture (12),
- a retention member (18) consisting of an annular body (24), the outer diameter of which corresponds substantially to the diameter of said central cavity (14) and having a cap (26), the outer diameter of which corresponds substantially to the diameter of said hole (16), said cap (26) of said retention member (18) projecting partially from said hole (16), wherein said cap (26) is provided internally with a vertical channel (28) communicating with the outside via a horizontal conduit (30) provided in the lateral surface of that part projecting from said hole (16), and
- elastic means (20) acting on said shut-off element (22) and said retention member (18) to maintain them spaced apart to close said entry aperture (12) and said hole (16),
wherein, when a user presses on said cap (26), then said cap (26), on overcoming the elastic reaction of said elastic means (20), can rotate until said horizontal conduit (30) is oriented in a required direction.

2. A heating structure as claimed in claim 1, **characterised in that** the shut-off element (22) comprises a seal holder (32) with a seal pad (34).

## Patentansprüche

1. Elektrische Heizanordnung, insbesondere ein Handtuchtrockner oder ein Heizkörper, die mit einem automatischen Sicherheitsventil versehen ist, **dadurch gekennzeichnet, dass** dieses Ventil eine Buchse (8) umfasst, die mit einer Eintrittsöffnung (12), deren Durchmesser kleiner als ein zentaler Hohlraum (14) ist, und mit einem Loch (16) versehen ist, wobei im Innern dieses zentralen Hohlraums (14) der Buchse (8) Folgendes verschiebbar angeordnet ist:
- ein Absperrelement (22) zum Verschließen der Eintrittsöffnung (12),
- ein Rückhalteglied (18), das aus einem ringförmigen Körper (24) besteht, dessen Außendurchmesser im Wesentlichen dem Durchmesser des zentralen Hohlraums (14) entspricht, und das eine Kappe (26) aufweist, deren Außendurchmesser im Wesentlichen dem Durchmesser des Lochs (16) entspricht, wobei die Kappe (26) des Rückhalteglieds (18) teilweise aus dem Loch (16) herausragt, wobei diese Kappe (26) innen mit einem senkrechten Kanal (28) versehen ist, der über einen waagrechten Kanal (30), der in der Seitenfläche des aus dem Loch (16) herausragenden Teils vorgesehen ist, mit außen verbunden ist, und
- elastische Mittel (20), die auf das Absperrelement (22) und das Rückhalteglied (18) einwirken, um sie beabstandet zu halten, um die Eintrittsöffnung (12) und das Loch (16) zu verschließen,
wobei, wenn ein Benutzer auf die Kappe (26) drückt, sich diese Kappe (26), indem sie die elastische Gegenwirkung der elastischen Mittel (20) überwindet, drehen kann, bis der waagrechte Kanal (30) in eine erforderliche Richtung gerichtet ist.

2. Heizanordnung nach Anspruch 1, **dadurch gekennzeichnet, dass** das Absperrelement (22) einen Dichtungshalter (32) mit einer Dichtplatte (34) umfasst.

## Revendications

1. Structure de chauffage électrique, en particulier un chauffe-serviettes ou un radiateur, munie d'une soupape de sûreté automatique, **caractérisée en ce que** ladite soupape comprend un manchon (8) muni d'une ouverture d'entrée (12) d'un diamètre inférieur à celui d'une cavité centrale (14) et d'un trou (16), à l'intérieur de ladite cavité centrale (14) dudit manchon (8) étant disposé de manière coulissante
- un élément de fermeture (22) pour fermer ladite ouverture d'entrée (12),
- un élément de rétention (18) constitué d'un corps annulaire (24), dont le diamètre externe correspond substantiellement au diamètre de ladite cavité centrale (14) et présentant un capuchon (26), dont le diamètre externe correspond substantiellement au diamètre dudit trou (16), ledit capuchon (26) dudit élément de rétention (18) se projetant partiellement à partir dudit trou (16), ledit capuchon (26) étant muni à l'intérieur d'un canal vertical (28) communiquant avec l'extérieur via un conduit horizontal (30) situé dans la surface latérale de cette partie se projetant à partir dudit trou (16), et
- des moyens élastiques (20) agissant sur ledit élément de fermeture (22) et ledit élément de rétention (18) pour les maintenir écartés en vue de fermer ladite ouverture d'entrée (12) et ledit trou (16),
dans laquelle, lorsqu'un utilisateur appuie sur ledit capuchon (26), alors ledit capuchon (26), en surmontant la réaction élastique desdits moyens élastiques (20), peut tourner jusqu'à ce que ledit conduit horizontal (30) soit orienté dans une direction requise.

2. Structure de chauffage selon la revendication 1, **caractérisée en ce que** l'élément de fermeture (22) comprend un support de joint (32) muni d'une plaque d'étanchéité (34).
